# EUROPÄISCHE PATENTSCHRIFT

(11) **EP 0 439 683 B1**
(45) Veröffentlichungstag und Bekanntmachung des Hinweises auf die Patenterteilung: **11.08.1993**
(21) Anmeldenummer: 90119971.1
(22) Anmeldetag: 18.10.1990
(51) Int. Cl.: B01J 19/00, C10G 9/16

(54) **Verfahren zur Verhinderung von Koksabscheidungen bei der thermischen Behandlung von Kohlenwasserstoffen**
Process to prevent carbon deposits during thermal treatment of hydrocarbons
Procédé d'élimination des dépôts de carbone lors d'un traitement thermique des hydrocarbures

(30) Priorität: 24.01.1990 DE 4001998
(43) Veröffentlichungstag der Anmeldung: 07.08.1991
(73) Patentinhaber: RÜTGERSWERKE AKTIENGESELLSCHAFT, 60326 Frankfurt (DE)
(72) Erfinder: Hüttinger, Klaus, Prof. Dr. Ing., W-7500 Karlsruhe 41 (DE); Nattermann, Claus, Dipl.-Chem., W-7500 Karlsruhe 1 (DE); Boenigk, Winfried, Dr., W-4716 Olfen (DE)

(56) Entgegenhaltungen:
- GB-A- 1 120 543
- US-A- 1 893 804
- US-A- 1 905 520
- US-A- 2 243 191

## Beschreibung

Die Erfindung betrifft ein Verfahren, mit dem es möglich ist, die Kohlenstoff- bzw. Koksabscheidung bei der thermischen Behandlung von Kohlenwasserstoffen z. B. an Reaktorwänden oder Rohrwänden von Röhrenöfen zu verhindern.

Es ist bekannt, daß sich beispielsweise bei der Flüssigphasenpyrolyse an den mit den flüssigen Kohlenwasserstoffen benetzten Oberflächen Kohlenstoffabscheidungen als Folge unerwünschter Nebenreaktionen bilden. So entstehen bei der verzögerten Verkokung (delayed coking) erhebliche Koksansätze im Röhrenofen, die periodisch durch Einleiten von Luft bzw. einem Dampf-Luft-Gemisch abgebrannt werden müssen. Aus Reaktoren oder Rohrleitungen mit großem Durchmesser werden die Koksablagerungen meist mechanisch, z. B. durch Fräsen oder Ausschneiden mit einem Wasserstrahl, entfernt.

Diese Verfahren sind sehr aufwendig, schädigen zum Teil auch die Konstruktionswerkstoffe, und verhindern nicht die nachteilige Beeinflussung der Prozeßparameter wie z. B. die Erhöhung des Druckverlustes und die Verringerung des Wärmeüberganges.

Auf Katalysatoren kann es schon bei Temperaturen ab 200 °C zu Koksabscheidungen kommen. Diese Verkokung kann beispielsweise durch erhöhten Wasserstoffdruck oder partielle Neutralisation des Katalysators vermindert werden (Ullmann's Enzyclopedia of Industrial Chemistry, 5th Ed., Vol A5, Seite 361). Dabei wird eine Verringerung der Wirksamkeit des Katalysators bewußt in Kauf genommen.

In der US-A 1 905 520 wird vorgeschlagen, für die Herstellung flüssiger Kohlenwasserstoffe aus methanhaltigen Gasen die innere Oberfläche der Reaktoren aus Chrom, Wolfram, Molybdän oder Graphit herzustellen, um eine bei 800 bis 1 200 °C resistente Oberfläche zu erhalten, durch die eine Zunahme unerwünschter Nebenreaktionen, insbesondere der Rußbildung verhindert werden soll. Die Bildung von pyrolytischem Kohlenstoff auf den Metalloberflächen läßt sich dabei nicht ganz vermeiden. Er kann mechanisch oder durch Abbrennen entfernt werden.

Bei der thermischen Behandlung hochsiedender Kohlenwasserstoffe, wie beispielsweise Steinkohlenteerpech, kommt es bereits bei Temperaturen um 500 °C zu Verkokungserscheinungen, die insbesondere an den Heizflächen zu festen Koksabscheidungen führen. Eine Beschichtung der Heizflächen mit Chrom führt nicht zum Erfolg. Auch durch die Metalle Wolfram und Molybdän läßt sich bei Langzeitversuchen die Koksabscheidung nicht völlig verhindern. Die Koksschichten sind leicht ablösbar und können daher mechanisch entfernt werden.

Es bestand daher die Aufgabe, ein Verfahren zu entwickeln, bei der thermischen Behandlung von Kohlenwasserstoffen die Kohlenstoff- bzw. Koksabscheidung zu verhindern, ohne dabei die Prozeßparameter negativ zu beeinflussen.

Die Aufgabe wird erfindungsgemäß dadurch gelöst, daß die in den Anlagen verwendeten Werkstoffe zumindest an ihren mit den Kohlenwasserstoffen in Berührung stehenden Flächen, auch den Schwefelverbindungen des Wolframs oder des Molybdäns bestehen.

Da die Verkokungserscheinungen auf Oberflächeneffekte zurückzuführen sind, reicht es aus, die mit den Kohlenwasserstoffen in Berührung stehenden Flächen der üblicherweise verwendeten Anlagen mit den gemäß der Erfindung vorgeschlagenen Werkstoffen in an sich bekannter Weise zu beschichten.

Die Erfindung wird anhand der nachfolgenden Beispiele erläutert.

Es ist bekannt, daß Steinkohlenteerpeche und Petrolpeche bei Temperaturen im Bereich von 400 bis 500 °C Mesophasen bilden, die als Koksvorstufe anzusehen sind. Da bei einer solchen Pechpyrolyse mit besonders starken Koksansätzen zu rechnen ist, wurden die Versuche unter solchen Temperaturbedingungen durchgeführt, bei denen die isotropen Peche nach dem Aufheizen bei konstanter Temperatur nach 4 h zu 60 bis 70 Gew.-% in Mesophasen umgewandelt waren.

Als Peche wurden ein Steinkohlenteerpech mit einem Erweichungspunkt (Kraemer-Sarnow) von 77 °C, einem Toluolunlöslichengehalt von 21,4 Gew.-% und einem Chinolinunlöslichengehalt von 0,4 Gew.-% und ein Petrolpech (A240) mit einem Erweichungspunkt (Kraemer-Sarnow) von 80 °C und einem Toluolunlöslichengehalt von 8 Gew.-%, das vollständig in Chinolin löslich war, verwendet.

### BEISPIELE:

### Beispiel 1

Rührerblätter aus Molybdän werden zur Oberflächensulfidierung 3 h lang mit einer Natrium-/Kaliumpolysulfidschmelze behandelt und nach dem Erkalten mit Wasser gewaschen, um das anhaftende Salz zu entfernen. Durch diese Maßnahme bildet sich auf den Rührerblättern eine etwa 5,5 µm dicke Molybdändisulfidschicht.

Steinkohlenteerpech wird in einem Reaktor mit diesen Rührblättern innerhalb von 1 h auf 440 °C in einer Argon-Atmosphäre bei einem Druck von 10 bar aufgeheizt. Nach dem Aufschmelzen des Peches wird bei einer Temperatur von 250 °C der Rührer eingeschaltet, und das Pech mit einer Rührerdrehzahl von 60 min⁻¹ gerührt. Nach einer Reaktionszeit von 4 h bei 440 °C wird die Heizung abgeschaltet, und der Reaktor entspannt. Dabei werden die Reaktionsgase und die leichtflüchtigen Pyrolyseprodukte mit einem Argonstrom ausgetrieben.

Nach dem Abkühlen werden die festen Reaktionsprodukte aus dem Reaktor entfernt und nach dem Zerkleinern mit THF in einer Soxhlet-Apparatur erschöpfend extrahiert Der Rückstand (Konversionsgrad) beträgt 62 Gew.-%.

Der Versuch wird wiederholt, wobei das Reaktionsprodukt im Reaktor unter Rühren bei 180 °C in einem Weichpech mit einem Erweichungspunkt (Kraemer-Sarnow) von 40 °C innerhalb 1 h gelöst wird. Der Rührer wird herausgenommen, und die Rührerblätter werden nach dem Abkühlen in der Soxhlet-Apparatur mit THF extrahiert, um den anhaftenden Pechfilm zu entfernen. Die Rührerblätter aus sulfidiertem Molybdän-Blech zeigen eine unveränderte Oberfläche ohne Koksansätze.

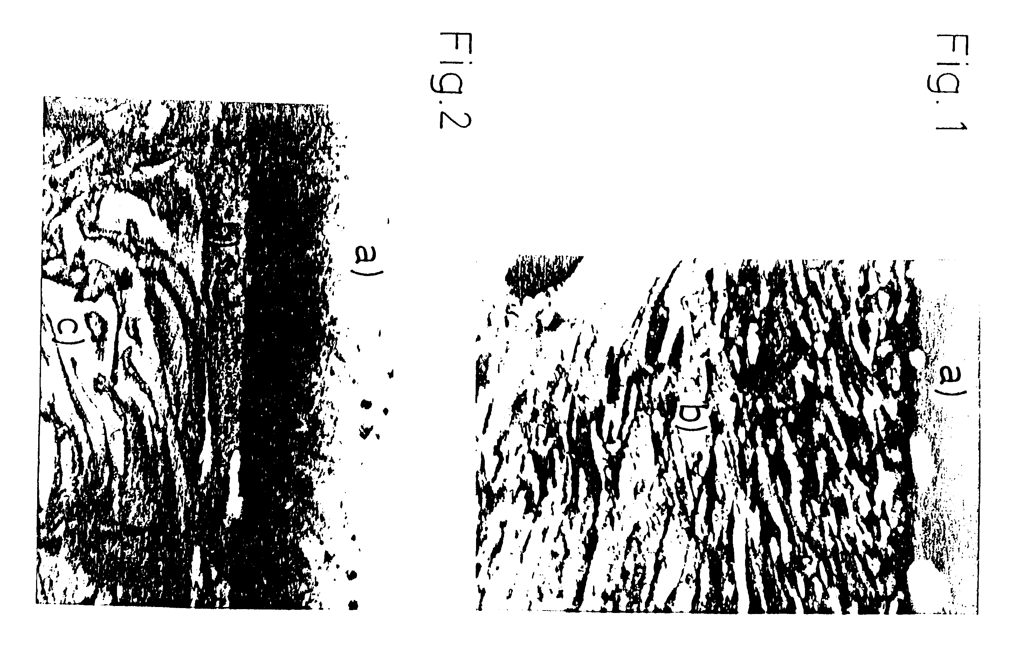

Bei einem weiteren Versuch unter gleichen Bedingungen wird der Produktbelag von den Rührblättern abgehoben, in einem Harz eingebettet und senkrecht zur Berührungsfläche mit dem Blech angeschliffen und poliert. Fig. 1 zeigt das Schliffbild in 130 facher Vergrößerung, aufgenommen mit Hilfe eines Polarisationsmikroskops. Der Schliff zeigt, daß die Mesophase (b) bis an die Berührungsfläche (a) reicht.

### Beispiel 2

Das Beispiel 1 wird mit Petrolpech wiederholt bei einer Reaktionstemperatur von 420 °C. Der Konversionsgrad beträgt 63 Gew.-%. Die untersuchten Rührerblätter zeigen die gleiche Erscheinung wie die im Beispiel 1.

### Beispiel 3 (Vergleich)

Der im Beispiel 1 beschriebene Versuch wird mit Rührerblättern aus Chrom-Nickel-Stahl wiederholt. Der Konversionsgrad ist der gleiche wie im Beispiel 1. nach der Extraktion der Rührerblätter mit THF bleibt auf deren Oberfläche ein dünner dunkelgrauer Koksbelag zurück, der fest haftet und auch in siedendem Pyridin nicht löslich ist. Er läßt sich auch mechanisch nicht vollständig entfernen. Fig. 2 zeigt ein Schliffbild des Rührerblattes vor der Extraktion mit THF. Zwischen der Oberfläche des Rührerblattes (a) und der Mesophasenschicht (c) befindet sich die etwa 10 µm dicke Koksschicht (b).

In weiteren Versuchen wurden Rührerblätter aus Messing und Kupfer verwendet, die nach Beendigung der Versuche alle mit einer festhaftenden Koksschicht überzogen waren. Auch beim Einsatz von Petrolpech, wie in den Beispielen 1 und 2, bildeten sich auf den Rührerblättern aus Chrom-Nickel-Stahl, Messing und Kupfer Koksbeläge.

Das es bekannt war, daß sich Koksabscheidungen auf Katalysatoroberflächen durch Erhöhung des Wasserstoffdruckes verringern lassen, wurden die Vergleichsversuche auch in einer Wasserstoff-Atmosphäre durchgeführt. Die Koksschichten auf den Rührerblättern aus Chrom-Nickel-Stahl, Messing und Kupfer ließen sich jedoch dadurch nicht verhindern.

Es war daher überraschend, daß auf den Oberflächen der Werkstoffe gemäß der Erfindung keine Koksabscheidung zu beobachten war, obwohl die Untersuchungen unter den extremen Bedingungen der Pechpyrolyse zur Erzeugung von Mesophasen - also der Koksvorstufe - durchgeführt wurden.

## Patentansprüche

1. Verfahren zur Verhinderung von Koksabscheidungen bei der thermischen Behandlung von Kohlenwasserstoffen, **dadurch gekennzeichnet,** daß die in den Anlagen verwendeten Werkstoffe zumindest an ihren mit den Kohlenwasserstoffen in Berührung stehenden Flächen aus den Schwefelverbindungen des Wolframs oder des Molybdäns bestehen.

2. Verfahren nach Anspruch 1, **dadurch gekennzeichnet,** daß als Werkstoffe für die Anlagen mit den Schwefelverbindungen des Wolframs oder des Molybdäns beschichtete Stahlbleche verwendet werden.

## Claims

1. Process for the prevention of coke deposits during the thermal treatment of hydrocarbons, characterised in, that the materials used in the plants, at least at the surfaces being in contact with the hydrocarbons are made of sulfur compounds of molybdenum or tungsten.

2. Process according to claim 1, characterised in, that steel sheets coated with the sulfur compounds of molybdenum or tungsten are used as materials in the plants.

## Revendications

1. Procédé d'élimination des dépôts de carbone lors du traitement thermique des hydrocarbures, caractérisé en ce que les matériaux utilises dans les installations se composent au moins au niveau de leurs surfaces se trouvant en contact avec les hydrocarbures, des composés de soufre de tungstène ou de molybdène.

2. Procédé selon la revendication 1, caractérisé en ce qu'en tant que matériaux pour les installations on utilise des tôles d'acier revêtues ou plaquées de composés de soufre de tungstène ou de molybdène.
